# EUROPEAN PATENT APPLICATION

(11) **EP 2 524 949 A1**
(43) Date of publication of application: **21.11.2012**
(21) Application number: 12168657.0
(22) Date of filing: 21.05.2012
(51) Int. Cl.: C09B 67/00, D06P 1/22

(54) **Dye composition and method for dyeing textile materials**

(30) Priority: 20.05.2011 SG 201103671
(71) Applicant: bluconnection pte ltd., Singapore 089260 (SG)
(72) Inventor: Schulze, Max Hans Jörg, 596386 Singapore (SG)
(74) Representative: Richter Werdermann Gerbaulet Hofmann

(57) **Abstract**

The present invention relates to an aqueous dye composition for dyeing textile materials, comprising
(a) a first dye component selected from the group consisting of leuco indigo and a derivative thereof, and
(b) a second dye component selected from the group consisting of leuco sulfur dyes, leuco sulfurized vat dyes, derivatives and compositions thereof,
wherein the total concentration of the first and second components is not higher than 45% by weight, based on the weight of the dye composition. Further, the invention relates to a method for dyeing textile materials with said dye composition.

## Description

The present invention relates to a dye composition and a method for dyeing textile materials by applying that dye composition.

Indigo and sulfur dyes are well known dyes used for dyeing cellulosic textile materials, especially the cotton-warp of denim articles. For the dyeing process the water-insoluble sulfur dye or indigo are converted by reduction into the water-soluble form generally referred to as "leuco form". After the actual dyeing process, oxidation of the dyes takes place on the textile material.

The dyeing process of indigo and sulfur dyes usually takes place in continuous dyeing machines in several vats, however there are also discontinuous techniques known on exhaust machines. In the conventional dyeing process the textile material is pre-dyed in one of the first vats of the dyeing machine with sulfur dyes and overdyed with indigo in subsequent vats. This technique is also called bottoming. It is also common to reverse the procedure, i.e. the textile material is dyed with indigo first and subsequently overdyed with sulfur dyes in one or several separate vats. This process is generally referred to as topping.

The dyeing of sulfur dyes in both procedures described takes place either at elevated temperatures of 70 to 98 °C in one to three vats or by a pad-steam process. The high temperatures and the steaming process are required to ensure adequate fixation of sulfur dyes. Indigo is applied in one to 15 vats at a temperature of 10 °C to 45 °C.

The disadvantage of these dyeing techniques is that they come not only with the brightening but also with a color change during the usual subsequent/final laundry treatment. This change in shade is caused by the layered dyeing process of indigo and sulfur dyes. This means there is no intimate mixing of the dyes on the cellulosic textile material.

Due to the different dyeing temperatures and the resulting different affinities of indigo and sulfur dyes for the cellulosic textile material, an application in the same dye bath is not possible with sufficient fixation or without tailing.

Furthermore it is not possible with the usual dye concentration of at least 40 g/l indigo and at least 5 g/l sulfur dye to produce a non-ageing, uniform, alkaline stock vat with common reducing agents such as sodium dithionite, thiourea dioxide, sodium sulfide and its derivatives, or glucose and glucose derivatives.

There is accordingly a demand for dye compositions and dyeing methods for dyeing textile materials which provide an increased quality of the dyeing, in particular a better color fastness, and prevent or at least minimize color changes of dyed textile materials during laundry processes, and yet are technically simpler to handle.

In a first aspect, the present invention relates to an aqueous dye composition for dyeing textile materials comprising
(a) a first dye component selected from the group consisting of leucoindigo and a derivative thereof, and
(b) a second dye component selected from the group consisting of leuco sulfur dyes, leuco sulfurized vat dyes, derivatives and compositions thereof,
   wherein the total concentration of the first and second components (taken together) is not higher than 45% by weight, based on the weight of the dye composition.

Said aqueous dye composition should be an aqueous solution of the first and the second components. Preferably, the aqueous dye composition is a highly concentrated and homogenous solution of the first and second components in water. The water content should be not lower than 50% and preferably not lower than 55%, based on the weight of the dye composition. Aqueous solutions are more stable than dispersion or paste as they do not undergo phase separation or phase changes and are less likely to underly other alterations and have therefore more stable properties.

The reduction of the dyes may be performed with alkali and a suitable reducing agent, which may be an inorganic or organic reducing agent. Alternatively, and preferably the reduction of the dyes can be achieved by means of electrochemical reduction. The reduction of the dyes can also preferably be achieved by catalytic hydrogenation of indigo.

The inventive dye composition can comprise further components generally used in dye compositions for dyeing textile materials, but this is not required. For example, the dye composition may comprise at least one alkali substance and/or at least one reducing agent. If reducing agents were used to prepare the leuco forms of dyes, they typically contain residues of the reducing agents. Such residues may be contained in the inventive dye composition, but the presence of a reducing agent is not required.

The alkali substance may be any conventional agent such as alkali metal hydroxides (e.g. sodium hydroxide, potassium hydroxide), alkaline earth metal hydroxides (e.g. magnesium hydroxide), alkali metal carbonate (e.g. sodium carbonate, potassium carbonate) and alkali metal hydrogen carbonates (e.g. sodium hydrogen carbonate, hydrogen potassium carbonate). Preferred alkali substances are sodium hydroxide or potassium hydroxide. The alkali substance is preferably used in amounts of 0% to 12% by weight, more preferably of up to 12% and most preferably of 0.1 to 12% by weight, based on weight of the dye composition.

In one embodiment of the invention, the dye composition does not comprise further components, but only consists of the first and second components, water as solvent and optionally an alkali substance.

The reducing agent is preferably selected from the group consisting of alkali polysulfides (e.g. sodium polysulfide), sodium dithionite, thiourea dioxide, alkali sulfides (e.g. sodium sulfide) and its derivatives, as well as glucose and glucose derivatives. A particularly preferred reducing agent is sodium dithionite.

As it is generally known, leucoindigo, leuco sulfur dyes and leuco-sulfurized vat dyes are the reduced forms of indigo, sulfur dyes and sulfurized vat dyes, respectively. The term "leuco" characterizes the reduced form of a dye. The leuco form of a dye is re-oxidized in the course of the dyeing process of a textile material.

The first component is leucoindigo. Preferably, the first component is leucoindigo obtained by a catalytic hydrogenation of indigo or electrochemical reduction of indigo. However leucoindigo obtained by reducing indigo with a reducing agent such as sodium dithionite can also be used. Leucoindigo is the reduced form of indigo.

The concentration of said first component should be not higher than 35% by weight, based on the weight of the dye composition. Preferably, the concentration of said first component should be not lower than 4% by weight, based on the weight of the dye composition.

The dyes mentioned as the second component of the inventive dye composition are described for example in the Color Index published by the British Society of Dyers and Colourits and the American Association of Textile Chemists and Colorists. Preferred examples of such dyes, i.e. dyes that show the effects of the present invention to an especially notably extend are the leuco forms C.I. Sulfur Black (e.g. C.I. Sulfur Black 1, C.I. Sulfur Black 76), C.I. Sulfur Blue (e.g. C.I. Sulfur Blue 2, C.I. Sulfur Blue 5, C.I. Sulfur Blue 15), C.I. Sulfur Brown (C.I. Sulfur Brown 7, C.I. Sulfur Brown 8, C.I. Sulfur Brown 21, C.I. Sulfur Brown 52), C.I. Sulfur Green (e.g. C.I. Sulfur Green 3), C.I. Sulfur Orange (e.g. C.I. Sulfur Orange 1), C.I. Sulfur Red (C.I. Sulfur Red 6). Especially preferred is C.I. Leuco Sulfur Black 1. The term "derivatives" as used in the present invention relates in particular to modifications having a similar chemical structure and dyeing properties with the provision that the modification is water-soluble.

The concentration of said second component should be not higher than 40% by weight, based on the weight of the dye composition. Preferably, the concentration of said second component should be not lower than 0.2% by weight, based on the weight of the dye composition.

As mentioned above, the total concentration of the first and second components in the dye composition should be not higher than 45 % by weight. If the content of the dyestuffs in the inventive dye composition is higher than 45% by weight, the dye composition could be become instable. On the other hand, the total concentration of the first and second components should be not lower than 4.2% by weight, based on the weight of the dye composition, to avoid an insufficient dyeing of the textile material.

In a preferred embodiment, the inventive dye composition is composed of
(a) 4 to 35% by weight leucoindigo,
(b) 0,2 to 40% by weight at least one of leuco sulfur and/or leuco sulfurized vat dyes,
(c) 0 to 12% by weight sodium hydroxide or potassium hydroxide, and
(d) water as solvent,
wherein the total concentration of the components (a) and (b) is not higher than 45% by weight. The term "% by weight" relates to the weight of the dye composition.

The inventive dye composition is useful for dyeing textile materials. Specific, but non-limiting examples of textile materials include cellulosic fibers (e.g. cotton, viscose rayon, hemp), polyamide fibers, polyvinyl alcohol fibers, wool and blended yarns. The textile materials may be in any fiber aggregate, yarn-line, and cloth-like forms. Preferred are cellulosic textile materials.

The use of the inventive composition makes it possible to use only a single dye bath for dyeing textile materials with indigo (or a derivate thereof) and sulfur or sulfuric vat dyes. The textile materials are dyed with both dyes (i.e. indigo and at least one sulfur dye or sulfuric vat) at the same time in the same dye bath. This reduces the technical requirements for the dyeing process and the dyeing technology as well as makes the dyeing process simpler to handle. It is also possible to dye the textile materials only once in a dye bath with sufficient dying effect.

Moreover, using the inventive dye composition, not only the brightening but also the color change during the usual laundry treatment can be prevented.

In another aspect, the present invention relates to a dye bath as described below containing the dye composition as described herein.

In another aspect, the present invention relates to a method for dyeing textile materials wherein the textile material is dyed in a dye bath containing the dye composition as described above.

The dye bath may further contain at least one alkali substance. The alkali substance may be any conventional agent such as alkali metal hydroxides (e.g. sodium hydroxide, potassium hydroxide), alkaline earth metal hydroxides (e.g. magnesium hydroxide), alkali metal carbonate (e.g. sodium carbonate, potassium carbonate) and alkali metal hydrogen carbonates (e.g. sodium hydrogen carbonate, hydrogen potassium carbonate). A preferred alkali substance is sodium hydroxide.

In a preferred embodiment the dye bath further contains at least one reducing agent or reduction has been achieved through electrochemical reduction. The reducing agent is preferably selected from the group consisting of alkali polysulfides (e.g. sodium polysulfide), sodium dithionite, thiourea dioxide, alkali sulfides (e.g. sodium sulfide) and its derivatives, as well as glucose and glucose derivatives. A particularly preferred reducing agent is sodium dithionite. Preferably, the dye bath comprises the inventive dye composition, at least one reducing agent and at least one alkali substance. The dye bath comprises more preferably the inventive dye composition, sodium dithionite and sodium hydroxide. The dye bath may comprise further components, however this is not required. It is one of the advantages of the present invention that only one dye bath is required for dyeing textile materials with leucoindigo (or a derivative thereof) and leuco sulfur or leuco sulfurized vat dyes (or derivatives thereof).

Said dye composition as described herein is preferably present in said dye bath in a concentration of 0.1 to 50 g/L and more preferably in a concentration of 5 to 30 g/L, based on the volume of said dye bath.

The alkali substance is preferably present in the inventive dye bath in a concentration in a range of from 0.01 epuivalents/L to 1.25 equivalents/L, more preferably of from 0.05 equivalents/L to 0.375 equivalents/L, based on the hydroxy groups of the alkali substance. Therefore the inventive dye bath may comprise an alkali substance with one hydroxy group per molecule in a concentration of from 0.01 mol/L to 1.25 mol/L, more preferably of from 0.05 mol/L to 0.375 mol/L. Examples are sodium hydroxide and potassium hydroxide. In case of an alkali substance with two hydroxy groups per molecule the concentration is preferably from 0.005 mol/L to 0.625 mol/L, more preferably of from 0.025 mol/L to 0.1875 mol/L. Examples are earth alkali hydroxides. Sodium hydroxide is the preferred alkali substance, which is preferably present in an amount of from 0.4 g/L to 50 g/L and more preferably in an amount of from 2 g/L to 15 g/L.

Dyeing can be carried out on any dyeing machine conventionally used for dyeing textile materials. Typically, the dyeing machines have a treating chamber with 1 to 15 dyeing vats and more preferably 3 to 10 dyeing vats. The dyeing vats contain the dye bath. For example, the dyeing may be carried out on conventional warp yarn dyeing machines having a treating chamber with 1 to 15 (preferably 3 to 10) dyeing vats containing the dye bath. The dyeing is typically carried out at a dye bath temperature of usually 10 °C to 45° C, preferably at 20 °C to 35 °C.

Preferably, the textile materials are continuously passed through a treating chamber containing said dye bath. For the continuous dyeing process dye replenishment is preferably done via a stock vat preparation containing the inventive dye composition, at least one reducing agent and at least one alkali substance. Preferably the stock vat preparation is of the same composition as the dyeing has before starting the dyeing process. Preferably the stock vat preparation is prepared in a reservoir disposed upstream to the treatment chamber and metered using dosing pumps or other types of metering devices. In this way, the dye replenishment is directly dosed into the dye bath.

A preferred stock vat preparation consists of the inventive dye composition, sodium dithionite, and sodium hydroxide.

The reduction of the dyes in the dye bath may be performed in an upstream mixing container with alkali and a suitable reducing agent, which may be an inorganic or organic reducing agent. Alternatively, the reduction of the dyes can be achieved by means of electrochemical reduction.

The following example serves to illustrate the invention in more detail. It is, however, not intended to limit its scope in any manner.

### Example

A cellulosic textile material was dyed with an embodiment of the inventive dye composition. Only one dye bath was used. The dyeing was carried out by using a padding machine in a continuous dyeing process.

### 1. Dye composition

The aqueous dye composition was obtained by mixing leucoindigo and C.I. leuco sulfur black 1 in water. The contents of these dyes were adjusted such that the resulting dye composition contained 200 g/kg leucoindigo and 50 g/kg C.I. leuco sulfur black 1, based on the weight of the dye composition.

### 2. Dye bath

The dye bath was prepared by mixing 94 kg dye composition as specified under point 1, 3 kg sodium hydroxide and 8 kg sodium dithionite in water. The so obtained dye bath had the following composition:
7500 I water,
94 kg dye composition
3 kg sodium hydroxide and
8 kg sodium dithionite.

### 3. Textile material

The textile material that was to be exposed to the dyeing process had the following properties:

| | |
|---|---|
| Textile material: | cotton yarn |
| Yarn count: | Ne 10 (8400 yards/Ib yarn) |
| Number of threads: | 4260 |

### 4. Padding machine and dyeing process

The padding machine used to continuously dyeing the textile materials had the below-indicated characteristics:

| | |
|---|---|
| Speed: | 25 m/min |
| Dye use: | 3.2 % (based on the yarn weight) |
| Volume of dye bath: | 7800 liter |
| Dyeing vats: | 6 |
| Trial length: | 5600 m |

### 5. Stock vat preparation

The stock vat preparation for the dye replenishment during the dyeing process had the following composition, based on the volume of the stock vat preparation:
800 g/l dyes composition containing
   200 g/kg leucoindigo
   50 g/kg C.I. leuco sulfur black 1
additionally
10 g/l sodium dithionite
5 g/l sodium hydroxide
water as solvent.
Total volume of the stock vat preparation: 200 l

During the dyeing process 0.8 l/min of the stock vat were added to the dye bath as well as appropriate amounts of sodium dithionite and sodium hydroxide.

### Results

After dyeing, weaving and finishing the textile material was washed with a standard industrial enzyme treatment. Even if different brightening can be achieved by different enzyme quantities or different washing times, there was no change in hue by using the inventive dye composition and the inventive dyeing process.

For comparison purposes, textile materials were produced with bottoming or topping with indigo and C.I. leuco sulfur Black 1. The dyed textile materials were subjected to the same washing steps as the textile materials obtained by using the inventive dye composition and the inventive dyeing method. As expected, a comparable brightening was found. However, the brightening was connected with a disadvantageous change in hue at the same time.

Textile materials dyed according to the invention and with longer washing cycles or higher enzyme concentrations turned out significantly bluer and more brilliant. A similar effect was also observed with cross samples of textile materials with staining.

## Claims

1. An aqueous dye composition for dyeing textile materials, comprising
(a) a first dye component selected from the group consisting of leucoindigo and a derivative thereof, and
(b) a second dye component selected from the group consisting of leuco sulfur dyes, leuco sulfurized vat dyes, derivatives and compositions thereof,
wherein the total concentration of the first and second components is not higher than 45% by weight, based on the weight of the dye composition.

2. The dye composition of claim 1, wherein the water content is not lower than 50% and preferably not lower than 55%, based on the weight of the dye composition.

3. The dye composition of claim 1 or claim 2, wherein said second dye component is selected from the group consisting of the leuco forms of C.I. Sulfur Black, C.I. Sulfur Blue, C.I. Sulfur Brown, C.I. Sulfur Green, C.I. Sulfur Orange and C.I. Sulfur Red.

4. The dye composition of one of the claims 1 to 3, wherein said second dye component is selected from the group consisting of the leuco forms of C.I. Sulfur Black 1, C.I. Sulfur Black 76, C.I. Sulfur Blue 2, C.I. Sulfur Blue 5, C.I. Sulfur Blue 15, C.I. Sulfur Brown 7, C.I. Sulfur Brown 8, C.I. Sulfur Brown 21, C.I. Sulfur Brown 52, C.I. Sulfur Green 3, C.I. Sulfur Orange 1 and Sulfur Red 6.

5. The dye composition of one of the claims 1 to 3, wherein said second dye component is the leuco form of C.I. Sulfur Black 1.

6. The dye composition of one of the claims 1 to 5, wherein said first component is obtained by electrochemical reduction of indigo or by catalytic hydrogenation of indigo.

7. The dye composition of one of the claims 1 to 6, wherein the concentration of said first component is not higher than 35% by weight, based on the weight of the dye composition.

8. The dye composition of one of the claims 1 to 7, wherein the concentration of said second component is not higher than 40% by weight, based on the weight of the dye composition.

9. The dye composition of one of the claims 1 to 8, wherein the composition further contains 0 to 12% by weight, preferably up to 12 % by weight and more preferably 0.1 to 12 % by weight of at least one alkali substance.

10. A dye bath containing a dye composition as claimed in one of the claims 1 to 9.

11. The dye bath of claim 10, wherein said dye composition is present in said dye bath in a concentration of 0.1 to 50 g/L, preferably in a concentration of 5 to 30 g/L, based on the volume of said dye bath.

12. The dye bath of claim 10 or claim 11, wherein said dye bath further contains at least one reducing agent.

13. The dye bath of one of the claims 10 to 12, wherein said dye bath further contains at least one alkali substance, preferably in a concentration in a range of from 0.01 equivalents/L to 1.25 equivalents/L, more preferably of from 0.05 equivalents/L to 0.375 equivalents/L, based on the hydroxy groups of the alkali substance.

14. A method for dyeing textile materials wherein the textile material is dyed in a dye bath of any of claims 10 to 13.

15. The method of claim 14, wherein the textile materials are dyed by using a single dye bath.

16. The method of any one of the claims 14 or 15, wherein the textile materials are only once inserted into the dye bath.

17. The method of any one of the claims 14 to 16, wherein the textile materials are continuously passed through a treatment chamber containing said dye bath.

18. The method of one of the claims 14 to 17, wherein a dye replenishment is added to said dye bath in form of a stock vat comprising said dye composition, at least one reducing agent, at least one alkali substance and water as solvent.

19. The method of claim 18, wherein said dye replenishment is added to the dye bath directly from a reservoir disposed upstream to the treatment chamber.
